# FASCICULE DE BREVET EUROPEEN

(11) **EP 2 921 547 B1**
(45) Date de publication et mention de la délivrance du brevet: **12.04.2017**
(21) Numéro de dépôt: 15305246.9
(22) Date de dépôt: 19.02.2015
(51) Int. Cl.: C10G 2/00, B01J 23/00, B01J 27/182, B01J 35/10, B01J 35/02, B01J 37/18, B01J 37/34, B01J 37/02, B01J 27/185, B01J 35/00

(54) **PROCÉDÉ FISCHER-TROPSCH UTILISANT UN CATALYSEUR À BASE D'UN METAL DU GROUPE VIIIB ET D'UN SUPPORT D'OXYDES COMPRENANT DE L'ALUMINE, DE LA SILICE ET DU PHOSPHORE.**
FISCHER-TROPSCH-VERFAHREN, BEI DEM EIN KATALYSATOR AUF DER BASIS EINES METALLS DER GRUPPE VIIIB UND EINES TRÄGERS AUS OXIDEN VERWENDET WIRD, DER ALUMINIUMOXID, SILIZIUMDIOXID UND PHOSPHOR UMFASST
FISCHER-TROPSCH PROCESS USING A CATALYST BASED ON A GROUP VIIIB METAL AND A CARRIER OF OXIDES INCLUDING ALUMINA, SILICA AND PHOSPHORUS

(30) Priorité: 20.03.2014 FR 1452312
(43) Date de publication de la demande: 23.09.2015
(73) Titulaire: IFP Énergies nouvelles, 92852 Rueil-Malmaison Cedex (FR); ENI S.p.A., 00144 Roma (IT)
(72) Inventeur: Decottignies, Dominique, 69230 Saint-Genis-Laval (FR); Diehl, Fabrice, 69003 Lyon (FR); Lecocq, Vincent, 69530 Orlienas (FR); Velly, Marie, 42520 Maclas (FR)
(74) Mandataire: Ruis, Alain

(56) Documents cités:
- WO-A2-00/10698
- WO-A2-2009/119977
- US-A1- 2001 023 840

## Description

La présente invention se rapporte au domaine des procédés de synthèse Fischer-Tropsch et notamment à l'utilisation d'un catalyseur présentant une résistance hydrothermale et mécanique améliorée dans un procédé Fischer-Tropsch, ledit catalyseur étant caractérisé par un support d'oxydes comprenant de l'alumine, de la silice et du phosphore.

Les procédés de synthèse Fischer-Tropsch permettent d'obtenir une large gamme de coupes hydrocarbonées à partir du mélange CO + H₂, communément appelé gaz de synthèse. L'équation globale de la synthèse Fischer-Tropsch peut s'écrire de la manière suivante :

nCO + (2n+1) H₂ → CₙH₂ₙ₊₂ + nH₂O

La synthèse Fischer-Tropsch est au coeur des procédés de conversion du gaz naturel, du charbon ou de la biomasse en carburants ou en intermédiaires pour l'industrie chimique. Ces procédés sont appelés GtL (Gas to Liquids selon la terminologie anglo-saxonne) dans le cas de l'utilisation de gaz naturel comme charge initiale, CtL (Coal to Liquids selon la terminologie anglo-saxonne) pour le charbon, et BtL (Biomass to Liquids selon la terminologie anglo-saxonne) pour la biomasse. Dans chacun de ces cas, la charge initiale est tout d'abord gazéifiée en gaz de synthèse, un mélange de monoxyde de carbone et de dihydrogène. Le gaz de synthèse est ensuite transformé majoritairement en paraffines grâce à la synthèse Fischer-Tropsch, et ces paraffines peuvent ensuite être transformées en carburants par un procédé d'hydroisomérisation-hydrocraquage. Par exemple, des procédés de transformation tels que l'hydrocraquage, le déparaffinage, et l'hydroisomérisation des coupes lourdes (C16+) permettent de produire différents types de carburants dans la gamme des distillats moyens: gazole (coupe 180-370°C) et kérosène (coupe 140-300°C). Les fractions plus légères C5-C15 peuvent être distillées et utilisées comme solvants.

Les catalyseurs employés pour la synthèse Fischer-Tropsch sont essentiellement des catalyseurs à base de cobalt ou de fer, même si d'autres métaux peuvent être utilisés. Néanmoins, le cobalt et le fer offrent un bon compromis performances/prix par rapport aux autres métaux.

La réaction de synthèse Fischer-Tropsch peut être réalisée dans différents types de réacteurs (lit fixe, mobile, ou triphasique (gaz, liquide, solide) par exemple de type autoclave parfaitement agité, ou colonne à bulles), et les produits de la réaction présentent notamment la caractéristique d'être exempts de composés soufrés, azotés ou de type aromatique.

Dans une mise en oeuvre dans un réacteur de type colonne à bulles (ou "slurry bubble column" selon la terminologie anglaise, ou encore "slurry" dans une expression simplifiée), la mise en oeuvre du catalyseur est caractérisée par le fait que celui-ci est divisé à l'état de poudre très fines, typiquement de l'ordre de quelques dizaines de micromètres, cette poudre formant une suspension avec le milieu réactionnel.

La réaction Fischer-Tropsch se déroule de manière classique entre 1 et 4 MPa (10 et 40 bar), à des températures comprises traditionnellement entre 200°C et 350°C. La réaction est globalement exothermique, ce qui nécessite une attention particulière à la mise en oeuvre du catalyseur.

Lors de sa mise en oeuvre dans les procédés de synthèse Fischer-Tropsch, et notamment dans les procédés de type "slurry", au sens précédemment défini, le catalyseur est soumis à des conditions particulièrement sévères en terme de stress mécanique et chimique.

En effet, les vitesses linéaires très élevées rencontrées dans les procédés "slurry" génèrent des chocs inter particulaires ou contre les parois des équipements, chocs qui peuvent entraîner la formation de fines. On entend par fines toute particule de taille inférieure à la taille minimale du catalyseur neuf. Ainsi, si la répartition granulométrique d'un catalyseur neuf démarre à 30 µm, on entend par fines toutes les particules de taille inférieure à 30 µm. La formation de ces fines est rédhibitoire car elle diminue les performances du catalyseur d'une part, et elle peut colmater le système de séparation solide/liquide d'autre part. Par ailleurs, ces fines, en particulier celles de taille submicronique, peuvent aussi être entraînées dans les produits de la réaction sans en être séparées, ce qui peut poser des problèmes par exemple lors de la conversion de ces produits par hydrocraquage ou hydroconversion.

Additionnellement à ces efforts mécaniques, le solide travaille en conditions hydrothermales poussées, c'est à dire sous des pressions partielles en vapeur d'eau (l'eau étant un coproduit fatal de la réaction). La quantité d'eau produite pendant la synthèse Fischer-Tropsch étant importante dans les conditions de la réaction, la pression partielle d'eau au sein du réacteur Fischer-Tropsch peut atteindre plusieurs bars. Il est donc nécessaire que le catalyseur soit parfaitement adapté à ces conditions réactionnelles, et en particulier à la présence d'eau. Il a été décrit dans la littérature l'effet délétère de l'eau sur un catalyseur à base d'alumine (J.P. Franck et coll., dans Journal of the Chemical Society-Chemical Communications, 10 (1984), 629-630). Dans cette publication, par réaction avec l'eau, même en conditions douces (faible température et basse pression), l'alumine se transforme partiellement en boehmite, ce qui fragilise d'un point de vue mécanique le catalyseur.

Dans le cas d'utilisation en réacteur triphasique ("slurry"), cette altération chimique, alliée aux conditions hydrodynamiques sévères décrites précédemment, conduit à une attrition marquée.

Ainsi, il est nécessaire de réduire au maximum la formation de fines en modifiant par exemple la composition du catalyseur et de son support pour que celui-ci soit plus résistant au phénomène d'attrition chimique et mécanique.

De nombreux travaux ont été effectués dans le but de stabiliser le support vis-à-vis des processus d'hydratation/redissolution du support dans un procédé Fischer-Tropsch. WO 00/10698 divulgue un procédé Fischer-Tropsch. L'utilisation de phases de structures spinelles du type MAl₂O₄ ou spinelles mixtes MₓM'₍₁₋ₓ₎Al₂O₄ a été décrite dans les documents FR2879478 et WO 2005/072866, M et M' étant généralement des métaux divalents tels que Mg, Sn, Ni, Co, Cu. On peut également citer les publications de Rotan et coll. dans Journal of the European Ceramic Society 33 (2013) 1-6 et Rytter et coll. dans Top. Catal. 54 (2011) 801-810. Dans ce cas, le métal divalent (notamment le nickel) est introduit sous forme d'un précurseur de type nitrate par exemple à hauteur de quelques pourcents sur le support initial contenant de l'alumine. Par calcination à très haute température, la phase spinelle est formée et stabilise l'ensemble du support.

L'ajout de silice dans un support à base d'alumine contenant une phase spinelle telle que définie ci-dessus a été décrit dans le document FR2879478.

Le document WO 2009/014292 décrit l'utilisation d'un support aluminique promu au phosphore permettant d'améliorer la résistance hydrothermale d'un catalyseur dans une réaction Fischer-Tropsch. L'introduction du phosphore sur un support alumine à porosité bi-modale et à haute surface spécifique permet dans ce cas d'améliorer la dispersion de la phase active à base de cobalt et donc d'optimiser la réactivité, mais aussi de limiter la formation de phases oxydes de cobalt (notamment d'aluminate de cobalt) à cause de l'eau formée pendant la réaction. Dans ce cas, le rôle du phosphore consiste essentiellement à limiter les interactions cobalt-support pour optimiser la dispersion et la réactivité, et à limiter le frittage du cobalt (et donc sa désactivation). L'inconvénient de l'invention réside dans le fait qu'elle s'applique à des alumines de fortes surfaces spécifiques (300 à 800 m²/g) et avec une distribution en taille de pores bimodale (entre 1 et 25 nm pour le premier domaine poreux, et entre 25 et 150 nm pour le second domaine poreux revendiqué).

Dans ce contexte, un des objectifs de la présente invention est de proposer un procédé Fischer-Tropsch utilisant un catalyseur présentant une résistance hydrothermale et mécanique améliorée tout en améliorant ses performances catalytiques, ledit catalyseur pouvant être en plus préparé à partir d'un support quelle que soit sa surface spécifique et la nature de sa répartition poreuse.

### Description de l'invention

L'invention porte sur un procédé Fischer-Tropsch utilisant un catalyseur à base d'au moins un métal du groupe VIIIB et d'un support d'oxydes comprenant de l'alumine, de la silice et du phosphore. Plus particulièrement, l'invention définie dans la revendication 1 concerne un procédé Fischer-Tropsch de synthèse d'hydrocarbures comprenant la mise en contact d'une charge comprenant du gaz de synthèse avec au moins un catalyseur sous une pression totale comprise entre 0,1 et 15 MPa, sous une température comprise entre 150 et 350°C, à une vitesse volumique horaire comprise entre 100 et 20000 volumes de gaz de synthèse par volume de catalyseur et par heure (100 à 20000 h⁻¹) et avec un rapport molaire H₂/CO du gaz de synthèse entre 0,5 et 4, ledit catalyseur contenant une phase active comprenant au moins un métal du groupe VIIIB choisi parmi le cobalt, le nickel, le ruthénium et le fer déposée sur un support d'oxydes comprenant de l'alumine, de la silice et du phosphore, ledit support d'oxydes ne contenant pas de phase spinelle ou spinelle mixte.

Il a été montré que la présence simultanée d'alumine, de silice et de phosphore dans le support confère au catalyseur final une résistance hydrothermale et une résistance à l'attrition bien supérieures aux catalyseurs de l'état d'art ne contenant qu'une ou deux de ces trois composantes, tout en améliorant ses performances catalytiques. Sans être lié à aucune théorie, il semble que la présence simultanée d'alumine, de silice et de phosphore dans le support montre un effet synergique pour l'amélioration de la résistance hydrothermale et mécanique, ledit effet synergique n'étant ni observé lorsque deux des composantes sont présentes (alumine et phosphore, ou alumine et silice) ni prévisible par la simple addition des effets d'amélioration de la résistance hydrothermale connus par l'ajout soit de phosphore soit de la silice sur une alumine.

Par conséquent, un objet de la présente invention est de proposer un procédé Fischer-Tropsch pour la préparation d'hydrocarbures à partir d'un gaz de synthèse en utilisant un catalyseur ayant, grâce à la présence simultanée d'alumine, de silice et de phosphore dans le support dudit catalyseur, une résistance hydrothermale et mécanique améliorée par rapport aux catalyseurs de l'état de l'art tout en améliorant ses performances catalytiques.

Un autre objet de la présente invention est de proposer un procédé de Fischer-Tropsch utilisant un catalyseur pouvant être préparé à partir d'un support quelle que soit sa surface spécifique et la nature de sa répartition poreuse et notamment à partir d'une alumine quelle que soit sa surface spécifique et la nature de sa répartition poreuse. Plus particulièrement, l'amélioration de la résistance hydrothermale et mécanique du catalyseur et donc *in fine* l'amélioration de l'activité catalytique à long terme est observable avec des catalyseurs préparés à partir d'alumines pouvant avoir des surfaces spécifiques inférieures à 300 m²/g, des distributions poreuses monomodales ainsi que des tailles de pores de l'ordre de 2 à 50 nm, avec une taille moyenne des pores entre 5 et 25 nm, de préférence entre 8 et 20 nm. En effet, le phénomène de la baisse de la surface spécifique lors de l'ajout du phosphore sur le support d'alumine décrit dans l'état de l'art est très modéré si le support comporte en plus de la silice. Ceci donne ainsi une plus grande flexibilité dans le choix du support et permet notamment de préparer des catalyseurs à partir d'alumines classiquement utilisées pour la synthèse de catalyseurs Fischer-Tropsch, c'est-à-dire des alumines ayant des surfaces spécifiques entre 150 m²/g et 250 m²/g, une distribution de pores monomodale et des tailles de pores de l'ordre de 2 à 50 nm, avec une taille moyenne des pores entre 5 et 25 nm, de préférence entre 8 et 20 nm. Ledit support est une silice-alumine phosphorée ou une alumine silicée phosphorée. La teneur en silice dudit support est entre 0,5% poids à 30% poids, de préférence entre 1,5% poids à 20% poids par rapport au poids total du support, et la teneur en phosphore dudit support est entre 0,1% poids et 10% poids dudit élément, de préférence entre 0,3 % poids et 5% poids par rapport au poids total du support.

Selon une variante, le métal du groupe VIIIB est le cobalt.

Selon une variante, la teneur en métal du groupe VIIIB est comprise entre 0,5 et 60% poids par rapport au poids du catalyseur.

Selon une variante, l'alumine à partir de laquelle le support est préparé a une surface spécifique comprise entre 50 m²/g et 500 m²/g, un volume poreux mesurée par porosimétrie au mercure compris entre 0,4 ml/g et 1,2 ml/g et une distribution poreuse monomodale.

Selon une variante, ledit support comprend en outre un oxyde simple choisi parmi l'oxyde de titane (TiO₂), la cérine (CeO₂) et la zircone (ZrO₂), seul ou en mélange. Selon une variante, ledit catalyseur comprend en outre au moins un dopant choisi parmi un métal noble des groupes VIIB ou VIIIB, un élément alcalin ou un élément alcalino-terreux ou un élément du groupe IIIA.

Selon une variante, préalablement à son utilisation, le catalyseur subit un traitement réducteur de manière à obtenir un catalyseur dans lequel le métal du groupe VIIIB de la phase active est au moins partiellement sous forme métallique.

Selon une variante, le procédé Fischer-Tropsch est mis en oeuvre dans un réacteur de type colonne à bulles.

Selon une variante, ledit catalyseur se trouve sous forme de particules ayant une taille comprise entre 10 et 500 micromètres.

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIIIB selon la classification CAS correspond aux métaux des colonnes 8, 9 et 10 selon la nouvelle classification IUPAC.

Les propriétés texturales et structurales du support et du catalyseur décrits ci-après sont déterminées par les méthodes de caractérisation connues de l'homme du métier. Le volume poreux total et la distribution poreuse sont déterminés dans la présente invention par porosimétrie au mercure (cf. Rouquerol F.; Rouquerol J.; Singh K. « Adsorption by Powders & Porous Solids: Principle, methodology and applications », Academic Press, 1999). Plus particulièrement, le volume poreux total est mesuré par porosimétrie au mercure selon la norme ASTM D4284-92 avec un angle de mouillage de 140°, par exemple au moyen d'un appareil modèle Autopore III™ de la marque Micromeritics™. La surface spécifique est déterminée dans la présente invention par la méthode B.E.T, méthode décrite dans le même ouvrage de référence que la porosimétrie au mercure, et plus particulièrement selon la norme ASTM D3663-03.

### Description détaillée

Le procédé Fischer-Tropsch selon l'invention permet la production d'hydrocarbures essentiellement linéaires et saturés C5⁺. Conformément à l'invention, on entend par hydrocarbures essentiellement linéaires et saturés C5⁺, des hydrocarbures dont la proportion en composés hydrocarbonés ayant au moins 5 atomes de carbone par molécule représente au moins 50% en poids, de préférence au moins 80% en poids de l'ensemble des hydrocarbures formés, la teneur totale en composés oléfiniques présents parmi lesdits composés hydrocarbonés ayant au moins 5 atomes de carbone par molécule étant inférieure à 15% poids. Les hydrocarbures produits par le procédé de l'invention sont ainsi des hydrocarbures essentiellement paraffiniques, dont la fraction présentant les points d'ébullition les plus élevés peut être convertie avec un rendement élevé en distillats moyens (coupes gazole et kérosène) par un procédé catalytique d'hydroconversion tel que l'hydrocraquage et/ou l'hydroisomérisation. La charge employée pour la mise en oeuvre du procédé de l'invention, est constituée par le gaz de synthèse qui est un mélange de monoxyde de carbone et d'hydrogène de rapports molaires H₂/CO pouvant varier entre 0,5 et 4 en fonction du procédé de fabrication dont il est issu. Le rapport molaire H₂/CO du gaz de synthèse est généralement voisin de 3 lorsque le gaz de synthèse est obtenu à partir du procédé de vaporeformage d'hydrocarbures ou d'alcool. Le rapport molaire H₂/CO du gaz de synthèse est de l'ordre de 1,5 à 2 lorsque le gaz de synthèse est obtenu à partir d'un procédé d'oxydation partielle. Le rapport molaire H₂/CO du gaz de synthèse est généralement voisin de 2,5 lorsqu'il est obtenu à partir d'un procédé de reformage autotherme. Le rapport molaire H₂/CO du gaz de synthèse est généralement voisin de 1 lorsqu'il est obtenu à partir d'un procédé de gazéification et de reformage d'hydrocarbures au CO₂ (dit reformage sec).

Le procédé Fischer-Tropsch selon l'invention est opéré sous une pression totale comprise entre 0,1 et 15 MPa, de préférence entre 0,5 et 10 MPa, sous une température comprise entre 150 et 350°C, de préférence entre 180 et 270°C. La vitesse volumique horaire est comprise entre 100 et 20000 volumes de gaz de synthèse par volume de catalyseur et par heure (100 à 20000 h⁻¹) et de préférence entre 400 et 10000 volumes de gaz de synthèse par volume de catalyseur et par heure (400 à 10000 h⁻¹).

Le procédé Fischer-Tropsch selon l'invention peut être effectué en réacteur de type autoclave parfaitement agité, lit bouillonnant, colonne à bulles, lit fixe ou lit mobile. De préférence, il est effectué dans un réacteur de type colonne à bulles.

De ce fait, la taille des grains du catalyseur utilisé dans le procédé Fischer-Tropsch peut être comprise entre quelques microns et 2 millimètres. Typiquement, pour une mise en oeuvre en réacteur triphasique « slurry » (en colonne à bulles), le catalyseur est finement divisé et se trouve sous forme de particules. La taille des particules de catalyseur sera comprise entre 10 et 500 micromètres (µm), de manière préférée entre 10 et 300 µm et de manière très préférée entre 20 et 150 µm, et de manière encore plus préférée entre 20 et 120 µm.

Le catalyseur employé pour la mise en oeuvre du procédé de synthèse d'hydrocarbures selon l'invention contient une phase active comprenant au moins un métal du groupe VIIIB choisi parmi le cobalt, le nickel, le ruthénium et le fer déposée sur un support d'oxydes comprenant de l'alumine, de la silice et du phosphore, ledit support d'oxydes ne contenant pas de phase spinelle. C'est en effet la présence simultanée d'alumine, de silice et de phosphore dans le support qui confère au catalyseur final une résistance hydrothermale et à l'attrition bien supérieure que celles connues des catalyseurs selon l'art antérieur.

Ladite phase active comprend au moins un métal du groupe VIIIB choisi parmi le cobalt, le nickel, le ruthénium et le fer. De manière préférée, ladite phase active comprend du cobalt. De manière très préférée, ladite phase active est constituée de cobalt.

La teneur en métal du groupe VIIIB choisi parmi le cobalt, le nickel, le ruthénium et le fer est entre 0,01 et 60% poids par rapport au poids du catalyseur.

Dans le cas où la phase active comprend au moins un métal choisi parmi le cobalt, le nickel et le fer, la teneur en ledit métal représente de 1 à 60% poids, de préférence de 5 à 30% poids, et de manière très préférée de 10 à 30% poids par rapport au poids du catalyseur.

Dans le cas où la phase active comprend du ruthénium, la teneur en ruthénium est comprise entre 0,01 et 10% poids, et de manière très préférée entre 0,05 et 5% poids par rapport au poids du catalyseur.

La phase active dudit catalyseur peut avantageusement comprendre en outre au moins dopant choisi parmi un métal noble des groupes VIIB ou VIIIB, un élément alcalin (élément du groupe IA) ou un élément alcalino-terreux (élément du groupe IIA) ou un élément du groupe IIIA. Le dopant permet d'améliorer la réductibilité du métal du groupe VIIIB, et donc son activité, ou sa sélectivité, ou encore de ralentir sa désactivation.

Lorsqu'au moins un dopant est présent, la teneur en dopant(s) est généralement comprise entre 20 ppm et 1% poids, et de préférence entre 0,01 à 0,5% poids par rapport au poids du catalyseur.

Dans le cas où le dopant est choisi parmi un métal noble des groupes VIIB ou VIIIB, il est de préférence choisi parmi le platine (Pt), le palladium (Pd), le rhodium (Rh) ou encore le rhénium (Re).

Dans le cas où le dopant est choisi parmi un élément alcalin ou un alcalino-terreux, il est de préférence choisi parmi le potassium (K), le sodium (Na), le magnésium (Mg) ou le calcium (Ca).

Dans le cas où le dopant est choisi parmi un élément du groupe IIIA, il est de préférence choisi parmi le bore (B).

Le support dudit catalyseur employé pour la mise en oeuvre du procédé de synthèse d'hydrocarbures selon l'invention est un support d'oxydes comprenant, et est de préférence constitué de l'alumine, de la silice et du phosphore, ledit support d'oxydes ne contenant pas de phase spinelle.

L'alumine présente dans le support d'oxydes présente généralement une structure cristallographique du type alumine delta (δ), gamma (γ), thêta (θ) ou alpha (α), seule ou en mélange.

Le support comprenant de l'alumine, de la silice et du phosphore peut être préparé à partir d'alumine quelle que soit sa surface spécifique et la nature de sa répartition poreuse. La surface spécifique de l'alumine à partir de laquelle le support est préparé est généralement comprise entre 50 m²/g et 500 m²/g, de préférence entre 100 m²/g et 300 m²/g, de façon plus préférée entre 150 m²/g et 250 m²/g. Le volume poreux de l'alumine à partir de laquelle le support est préparé est généralement compris entre 0,4 ml/g et 1,2 ml/g, et de préférence compris entre 0,45 ml/g et 1 ml/g.

La distribution poreuse des pores dans l'alumine à partir de laquelle le support est préparé peut être de type monomodale, bimodale ou plurimodale. De préférence, elle est de type monomodale. La taille de pores est de l'ordre de 2 à 50 nm, avec une taille moyenne des pores entre 5 et 25 nm, de préférence entre 8 et 20 nm.

Les caractéristiques de l'alumine mentionnées ci-dessus correspondent aux caractéristiques de l'alumine à partir de laquelle le support est préparé, c'est-à-dire avant l'introduction de la silice, du phosphore, de la phase active et des éventuels dopants.

La teneur en silice dans le support varie de 0,5% poids à 30% poids, de manière préférée de 1% poids à 25% poids, et de manière encore plus préférée de 1,5 à 20% poids par rapport au poids du support.

On entend par un support comprenant de l'alumine et de la silice un support dans lequel le silicium et l'aluminium est sous forme d'agglomérats de silice ou d'alumine respectivement, d'aluminosilicate amorphe ou toute autre phase mixte contenant du silicium et de l'aluminium, étant entendu que le support n'est pas mésostructuré. L'alumine et la silice sont présents sous forme de mélange d'oxydes SiO₂-Al₂O₃ dénommée silice-alumine ou alumine silicée. On entend par alumine silicée une alumine comprenant entre 0,5 et 10% pds de silice par rapport au poids du support. On entend par silice-alumine une alumine comprenant un pourcentage de silice strictement supérieur à 10% poids allant jusqu'à 30% pds par rapport au poids du support. Ladite silice-alumine ou l'alumine silicée est homogène à l'échelle du micromètre, et de manière encore plus préférée, homogène à l'échelle du nanomètre.

La teneur en phosphore dans le support varie de 0,5 à 3 % poids par rapport au poids du support.

Sans être lié à aucune théorie, le phosphore présent dans le support d'oxydes se présente avantageusement sous une forme mixte de type aluminophosphate (AlPO₄) par exemple, ou encore sous forme de groupements phosphates, polyphosphates, pyrophosphates, phosphonates, phosphinates, phosphines, phosphinites, phosphonites ou phosphites présents à la surface du solide.

Le support d'oxydes comprenant de l'alumine, de la silice et du phosphore ne contient pas de phase spinelle. On entend par phase spinelle une spinelle simple MAl₂O₄ ou mixte MₓM'₍₁₋ₓ₎Al₂O₄ partielle ou non, où M et M' sont des métaux distincts choisis dans le groupe constitué par le magnésium (Mg), le cuivre (Cu), le cobalt (Co), le nickel (Ni), l'étain (Sn), le zinc (Zn), le lithium (Li), le calcium (Ca), le césium (Cs), le sodium (Na), le potassium K, le fer (Fe) et le manganèse (Mn) et où x est compris entre 0 et 1, les valeurs 0 et 1 étant elles-mêmes exclues.

La présence (ou l'absence) de phase spinelle dans le catalyseur utilisé dans le procédé Fischer-Tropsch selon l'invention se mesure par réduction en température programmée RTP (ou TPR pour "temperature programmed reduction" selon la terminologie anglo-saxonne) tel que par exemple décrit dans Oil & Gas Science and Technology, Rev. IFP, Vol. 64 (2009), No. 1, pp. 11-12*.* Selon cette technique, le catalyseur est chauffé sous flux d'un réducteur, par exemple sous flux de dihydrogène. La mesure du dihydrogène consommé en fonction de la température donne des informations quantitatives sur la réductibilité des espèces présentes. La présence d'une phase spinelle dans le catalyseur se manifeste ainsi par une consommation de dihydrogène à une température supérieure à environ 800°C.

La surface spécifique du support d'oxydes comprenant une alumine, de la silice et du phosphore est généralement comprise entre 50 m²/g et 500 m²/g, de préférence entre 100 m²/g et 300 m²/g, de façon plus préférée entre 150 m²/g et 250 m²/g. Le volume poreux dudit support est généralement compris entre 0,3 ml/g et 1,2 ml/g, et de préférence compris entre 0,4 ml/g et 1 ml/g.

Le support d'oxydes comprenant de l'alumine, de la silice et du phosphore peut en outre comprendre un oxyde simple choisi parmi l'oxyde de titane (TiO₂), la cérine (CeO₂) et la zircone (ZrO₂), seul ou en mélange.

Le support sur lequel est déposée ladite phase active peut présenter une morphologie sous forme de billes, d'extrudés (par exemple de forme trilobes ou quadrilobes) ou de pastilles, notamment lorsque ledit catalyseur est mis en oeuvre dans un réacteur fonctionnant en lit fixe, ou présenter une morphologie sous forme de poudre de granulométrie variable, notamment lorsque ledit catalyseur est mis en oeuvre dans un réacteur de type colonne à bulles.

La surface spécifique du catalyseur comprenant la phase active et le support d'oxydes comprenant de l'alumine, de la silice et du phosphore est généralement comprise entre 50 m²/g et 500 m²/g, de préférence entre 80 m²/g et 250 m²/g, de façon plus préférée entre 90 m²/g et 150 m²/g. Le volume poreux dudit catalyseur est généralement compris entre 0,2 ml/g et 1 ml/g, et de préférence compris entre 0,25 ml/g et 0,8 ml/g. De préférence, la distribution poreuse est monomodale.

De manière préférée, le catalyseur employé pour la mise en oeuvre du procédé Fischer-Tropsch selon l'invention comprend une phase active comprenant du cobalt et un support d'oxydes comprenant une silice-alumine phosphoré ou une alumine silicée phosphoré, la teneur en silice dudit support étant de préférence entre 1,5 et 20 % poids par rapport au poids du support et la teneur en phosphore dudit support étant de préférence entre 0,3 et 5 % poids dudit élément par rapport au poids du support, ledit support ne contenant pas de phase spinelle.

De manière particulièrement préférée, le catalyseur employé pour la mise en oeuvre du procédé Fischer-Tropsch selon l'invention est un catalyseur dans lequel la phase active est constituée de cobalt et le support d'oxydes est constitué d'une silice-alumine phosphorée ou une alumine silicée phosphorée, la teneur en silice SiO₂ dudit support est comprise entre 1,5 % et 20% poids par rapport au poids du support et la teneur en phosphore dudit support est comprise entre 0,3 et 5 % poids dudit élément par rapport au poids du support, ledit support ne contenant pas de phase spinelle.

### Procédé de préparation du catalyseur

La préparation du catalyseur mis en oeuvre dans le procédé Fischer-Tropsch selon l'invention peut être effectuée par plusieurs variantes. La préparation du catalyseur comporte généralement dans un premier temps la préparation du support d'oxydes comprenant de l'alumine, de la silice et du phosphore, puis, dans un deuxième temps l'introduction de la phase active.

Selon une variante préférée, le procédé de préparation du catalyseur mis en oeuvre dans le procédé Fischer-Tropsch selon l'invention comprend les étapes suivantes :
a) on fournit un support d'oxydes comprenant de l'alumine et de la silice,
b) on imprègne par une solution aqueuse ou organique d'un précurseur de phosphore ledit support d'oxydes comprenant de l'alumine et de la silice, puis on sèche et on calcine de manière à obtenir un support comprenant de l'alumine, de la silice et du phosphore,
c) on imprègne le support d'oxydes comprenant de l'alumine, de la silice et du phosphore par une solution aqueuse ou organique comprenant au moins un sel de métal du groupe VIIIB choisi parmi le cobalt, le nickel, le ruthénium et le fer, puis on sèche et on calcine à une température comprise entre 320°C et 460°C de manière à obtenir ledit catalyseur.

Selon l'étape a), on fournit un support comprenant de l'alumine et de la silice. La teneur en silice SiO₂ peut varier de 0,5% poids à 30% poids, de manière préférée de 1% poids à 30% poids, et de manière encore plus préférée de 1,5 à 20 % poids par rapport au poids du support. De préférence, on fournit un support de silice-alumine ou d'alumine silicée. Un tel support peut être acheté ou fabriqué, par exemple par atomisation d'un précurseur d'alumine en présence d'un composé comprenant du silicium. Le support comprenant de l'alumine et de la silice peut être fourni par tout autre moyen connu de l'Homme de l'Art, par exemple par imprégnation d'un composé organosilylé de type TEOS (tetraethylorthosilicate) sur une alumine. Dans ce cas, cette imprégnation, suivie d'un séchage et d'une calcination, est préliminaire à l'étape a) décrite ci-dessus.

Selon l'étape b), on imprègne par une solution aqueuse ou organique d'un précurseur de phosphore ledit support comprenant de l'alumine et de la silice, puis on sèche et on calcine ledit support comprenant de l'alumine, de la silice et du phosphore.

Ladite étape d'imprégnation b) est avantageusement réalisée par au moins une solution contenant au moins un précurseur de phosphore. En particulier, ladite étape peut avantageusement être réalisée par imprégnation à sec, par imprégnation en excès, ou encore par dépôt - précipitation selon des méthodes bien connues de l'Homme du métier. De manière préférée, ladite étape d'imprégnation est réalisée par imprégnation à sec, de préférence à température ambiante, et de manière préférée à une température égale à 20°C. Ladite étape d'imprégnation consiste à mettre en contact ledit support comprenant de l'alumine et de la silice avec au moins une solution contenant au moins un précurseur de phosphore, dont le volume est égal au volume poreux dudit support à imprégner. Cette solution contient le précurseur de phosphore à la concentration voulue pour obtenir sur le support final la teneur en phosphore visée, entre 0,5 et 3 % poids par rapport au poids du support.

Le précurseur de phosphore utilisé peut être n'importe quel précurseur de phosphore connu de l'Homme de l'Art. On peut avantageusement utilisé l'acide phosphorique et ses dérivés phosphates, l'acide phosphoreux et ses dérivés phosphonates, l'acide phosphinique et ses dérivés phosphinates, l'acide phosphonique et ses dérivés phosphonates, l'acide pyrophosphorique et ses dérivés phosphates, le pentoxyde de diphosphore, les phosphines, phosphites, phosphinites ou les phosphonites. De manière préférée, l'acide phosphorique en solution aqueuse est utilisé.
Le solide comprenant de l'alumine, de la silice et du phosphore est ensuite séché et calciné. Le séchage est avantageusement effectué à une température comprise entre 60°C et 200°C, de préférence pendant une durée allant de 30 minutes à trois heures. La calcination est avantageusement effectuée à une température comprise entre 200°C et 1100°C, de préférence pendant une durée allant de 1 heure à 24 heures, et de manière préférée de 2 heures à 8 heures. La calcination est généralement effectuée sous atmosphère oxydante, par exemple sous air, ou sous air appauvri en oxygène ; elle peut également être effectuée au moins en partie sous azote.

Toutes les étapes de séchage et de calcination décrites dans la présente description peuvent être réalisées par toute technique connue de l'Homme de l'Art : lit fixe, lit fluidisé, étuve, four à moufles, four tournant.

Selon l'étape c), l'imprégnation du support comprenant de l'alumine, de la silice et du phosphore est avantageusement réalisée par au moins une solution contenant au moins un précurseur dudit métal du groupe VIIIB choisi parmi le cobalt, le nickel, le ruthénium et le fer. En particulier, ladite étape peut avantageusement être réalisée par imprégnation à sec, par imprégnation en excès, ou encore par dépôt - précipitation selon des méthodes bien connues de l'Homme du métier. De manière préférée, ladite étape d'imprégnation est réalisée par imprégnation à sec, de préférence à température ambiante, et de manière préférée à une température égale à 20°C. Ladite étape d'imprégnation consiste à mettre en contact ledit support d'oxydes avec au moins une solution contenant au moins un précurseur dudit métal du groupe VIIIB, dont le volume est égal au volume poreux dudit support à imprégner. Cette solution contient le précurseur métallique du ou des métaux du groupe VIIIB à la concentration voulue pour obtenir sur le catalyseur final la teneur en métal visée, avantageusement une teneur en métal comprise entre 0,5 et 60 % poids, et de préférence entre 5 et 30 % poids par rapport au poids du catalyseur.
Le métal ou les métaux du groupe VIIIB sont mis au contact du support par l'intermédiaire de tout précurseur métallique soluble en phase aqueuse ou en phase organique. Lorsqu'il est introduit en solution organique, le précurseur du métal du groupe VIIIB est de préférence l'oxalate ou l'acétate dudit métal du groupe VIIIB. De manière préférée, le précurseur du métal du groupe VIIIB est introduit en solution aqueuse, de préférence sous forme de nitrate, de carbonate, d'acétate, de chlorure, d'oxalate, de complexes formés par un polyacide ou un acide-alcool et ses sels, de complexes formés avec les acétylacétonates, ou de tout autre dérivé inorganique soluble en solution aqueuse, laquelle est mise en contact avec ledit support. Dans le cas préféré où le métal du groupe VIIIB est le cobalt, le précurseur de cobalt avantageusement utilisé est le nitrate de cobalt, l'oxalate de cobalt ou l'acétate de cobalt. De manière la plus préférée, le précurseur utilisé est le nitrate de cobalt.

Le catalyseur ainsi obtenu est ensuite séché et calciné. Le séchage est avantageusement effectué à une température comprise entre 60°C et 200°C, de préférence pendant une durée allant de 30 minutes à trois heures. La calcination est réalisée à une température comprise entre 320°C et 460°C, de préférence entre 350 et 440°C et de manière préférée entre 360 et 420°C. Elle est préférentiellement réalisée pendant une durée comprise entre 15 min et 15h et de préférence entre 30 min et 12h et de manière encore plus préférée entre 1h et 6h. La calcination est généralement effectuée sous atmosphère oxydante, par exemple sous air, ou sous air appauvri en oxygène ; elle peut également être effectuée au moins en partie sous azote.

La calcination de l'étape c) doit être effectuée à une température relativement basse, généralement comprise entre 320°C et 460°C, afin d'éviter la formation d'une phase spinelle qui se forme lors d'une calcination à une température supérieure à 700°C, généralement entre 700°C et 1200°C.

L'imprégnation de ladite phase active de l'étape c) peut être effectuée en une seule ou en plusieurs étapes d'imprégnation. Dans le cas de teneurs en métaux relativement élevées, l'imprégnation en deux étapes voire en trois étapes est préférée. Entre chacune des étapes d'imprégnation, il est préféré d'effectuer éventuellement au moins une étape supplémentaire de séchage et/ou de calcination dans les conditions décrites ci-dessus, et/ou de réduction dans les conditions décrites ci-dessous.

Ladite étape d'imprégnation c) du support avec la phase active, peut également avantageusement comprendre au moins une étape supplémentaire consistant à déposer au moins un dopant choisi parmi un métal noble des groupes VIIB ou VIIIB, un élément alcalin (élément du groupe IA) ou un élément alcalino-terreux (élément du groupe IIA) ou un élément du groupe IIIA, seul ou en mélange, sur ledit support d'oxydes.

Le dépôt du dopant sur le support peut avantageusement être réalisé par toute méthode connue de l'Homme du métier, préférentiellement par imprégnation dudit support d'oxydes par au moins une solution contenant au moins un précurseur dudit dopant, et de préférence, par imprégnation à sec ou par imprégnation en excès. Cette solution contient au moins un précurseur dudit dopant à la concentration voulue pour obtenir sur le catalyseur final la teneur en dopant visée, avantageusement une teneur en dopant comprise entre 20 ppm et 1% poids, et de préférence entre 0,01 à 0,5 % poids par rapport au poids du catalyseur.

Par la suite, le catalyseur contenant le dopant est séché et calciné dans les mêmes conditions que celles décrites dans les étapes de séchage et de calcination lors de l'imprégnation de la phase active.

L'imprégnation de la phase active et du dopant peut également être effectuée par une seule solution (co-imprégnation).

La préparation du catalyseur mis en oeuvre dans le procédé Fischer-Tropsch selon l'invention, et notamment la préparation du support peut être effectuée par d'autres variantes.

Selon une autre variante de préparation du catalyseur, il est envisageable d'introduire simultanément les précurseurs de silicium et de phosphore dans le support comprenant de l'alumine.

Le support comprenant de l'alumine, de la silice et du phosphore, sans que cela soit restrictif, peut être préformé ou en poudre.

De même, il est possible de préparer ledit support par coprécipitation d'une solution aqueuse contenant les éléments Al, Si, P, sous forme de nitrate par exemple pour l'aluminium, et d'acide ou sel d'acide pour le phosphore et le silicium, par une solution aqueuse de carbonate ou d'hydrogénocarbonate, suivie d'un lavage, d'un séchage et d'une calcination.

Il est également possible de préparer ce support par procédé sol-gel, ou encore par complexation d'une solution aqueuse contenant les éléments Al, Si et P par au moins un acide alpha-alcool ajouté à raison de 0,5 à 2 moles d'acide par mole d'éléments Al, Si et P, suivi d'un séchage sous vide conduisant à l'obtention d'une substance vitreuse homogène, puis d'une calcination.

Préalablement à son utilisation dans le réacteur catalytique de synthèse Fischer-Tropsch, le catalyseur subit généralement un traitement réducteur, par exemple sous hydrogène pur ou dilué, à haute température, destiné à activer le catalyseur et à former des particules de métal à l'état zéro valent (sous forme métallique). Ce traitement peut être effectué *in situ* (dans le même réacteur que celui où est opéré la synthèse Fischer-Tropsch), ou *ex situ* avant d'être chargé dans le réacteur. La température de ce traitement réducteur est préférentiellement comprise entre 200°C et 500°C et sa durée est généralement comprise entre 2 et 20 heures.

L'invention est illustrée par les exemples qui suivent.

### Exemple 1 : Préparation des catalyseurs A, B, C et F (comparatifs) et D, E et G (selon l'invention).

### Catalyseur A (non-conforme) : Catalyseur 15% Co sur alumine

Un catalyseur A formé de Co/alumine est préparé par imprégnation à sec d'une solution aqueuse de nitrate de cobalt sur une alumine commerciale (Puralox® SCCa Sasol Germany) en poudre (granulométrie moyenne = 90 µm) de 170 m²/g.

Après 12 heures de séchage en étuve à 120°C, le solide est calciné 2 heures à 420°C sous un flux d'air en réacteur de type lit traversé. Le solide obtenu contient 9,2% pds de Co. Ce solide intermédiaire subit une nouvelle imprégnation par une solution de nitrate de cobalt, puis un séchage et une calcination identiques à l'étape précédente. On obtient en deux étapes de préparation le catalyseur final A qui contient 15,2% poids de cobalt.

### Catalyseur B (non-conforme) : Catalyseur 15% Co sur alumine phosphorée à 1 % P

Une alumine commerciale (Puralox® SCCa de Sasol Germany) en poudre (granulométrie moyenne = 90 µm) de 170 m²/g est imprégnée par une solution d'acide phosphorique H₃PO₄. Le solide obtenu est séché en étuve pendant 12 h à 120°C, puis calciné dans un réacteur tubulaire en lit fixe à 420°C pendant 2 heures. Le support contient à présent 1,1% poids de phosphore. Sur ce support aluminique promu avec du phosphore, on imprègne à sec une solution aqueuse de nitrate de cobalt. Le solide obtenu est séché à 120°C en étuve pendant 12 h, puis calciné sous air dans un réacteur tubulaire en lit fixe pendant 2 h à 420°C. Le solide intermédiaire ainsi obtenu contient 8,9% poids de cobalt. Ce solide est à nouveau imprégné par une solution aqueuse de cobalt, puis séché et calciné tel que décrit précédemment. Le catalyseur B final contient 15,1% poids de cobalt.

### Catalyseur C (non-conforme) : Catalyseur 15% Co sur alumine-silicée à 5%SiO₂

Sur un support Siralox® 5 commercial (Sasol Germany), contenant 5% poids de SiO₂, de granulométrie centrée sur 80 µm, est imprégnée une solution de nitrate de cobalt. Le solide est ensuite séché pendant 12 heures à 120°C, puis calciné sous air 2 heures à 420°C. La teneur en cobalt est alors de 8,5% poids. Une seconde imprégnation est ensuite réalisée de la même manière que précédemment, suivie d'un séchage et d'une calcination dans les mêmes conditions que celles décrites précédemment. Le solide final C contient alors 14,9% poids de cobalt.

### Catalyseur D (selon l'invention) : Catalyseur 15% Co sur alumine silicée phosphorée à 5%SiO₂ et à 1 % P

Sur un support commercial Siralox® 5 (Sasol Germany) contenant 5% poids de silice est imprégnée une solution d'acide phosphorique H₃PO₄. Le solide obtenu est séché en étuve à 120°C pendant 2 heures, puis calciné sous flux d'air dans un réacteur tubulaire en lit fixe à 420°C pendant 2 heures. Ainsi, ce support est à la fois stabilisé par du silicium (4,9% poids de SiO₂) et par du phosphore (1,1% poids de P). Sur ce support stabilisé, on imprègne une solution de nitrate de cobalt, et de la même manière que précédemment, le solide est séché en étuve puis calciné sous air. Le solide intermédiaire calciné contient 9,1% poids de cobalt. De même que sur les exemples précédents, ce solide intermédiaire est à nouveau imprégné par une solution aqueuse de cobalt, séché à 120°C pendant 12 heures, puis calciné sous air dans un réacteur tubulaire en lit fixe. Le catalyseur final D contient alors 15,0% poids de cobalt, et est basé sur un support co-stabilisé par du silicium et du phosphore.

### Catalyseur E (selon l'invention) : Catalyseur 15% Co sur alumine silicée phosphorée à 5%SiO₂ et à 2,5 % P

Sur un support commercial Siralox® 5 (Sasol Germany) contenant 5% poids de silice est imprégnée une solution d'acide phosphorique H₃PO₄. Le solide obtenu est séché en étuve à 120°C pendant 2 heures, puis calciné sous flux d'air dans un réacteur tubulaire en lit fixe à 420°C pendant 2 heures. Ainsi, ce support est à la fois stabilisé par du silicium (4,9% poids de SiO₂) et par du phosphore (2,5% poids de P). Sur ce support stabilisé, on imprègne une solution de nitrate de cobalt, et de la même manière que précédemment, le solide est séché en étuve puis calciné sous air. Le solide intermédiaire calciné contient 9,0% poids de cobalt. De même que sur les exemples précédents, ce solide intermédiaire est à nouveau imprégné par une solution aqueuse de cobalt, séché à 120°C pendant 12 heures, puis calciné sous air à 420°C dans un réacteur tubulaire en lit fixe pendant 2h. Le catalyseur final E contient alors 15,1% poids de cobalt, et est basé sur un support co-stabilisé par du silicium et du phosphore.

### Catalyseur F (non-conforme): catalyseur 15% Co sur alumine silicée phosphorée à 5% SiO₂ et à 5%P

Sur un support commercial Siralox® 5 (Sasol Germany) contenant 5% poids de silice est imprégnée une solution d'acide phosphorique H₃PO₄. Le solide obtenu est séché en étuve à 120°C pendant 2 heures, puis calciné sous flux d'air dans un réacteur tubulaire en lit fixe à 420°C pendant 2 heures. Ainsi, ce support est à la fois stabilisé par du silicium (4,8% poids de SiO₂) et par du phosphore (5,1% poids de P). Sur ce support stabilisé, on imprègne une solution de nitrate de cobalt, et de la même manière que précédemment, le solide est séché en étuve puis calciné sous air. Le solide intermédiaire calciné contient 8,7% poids de cobalt. De même que sur les exemples précédents, ce solide intermédiaire est à nouveau imprégné par une solution aqueuse de cobalt, séché à 120°C pendant 12 heures, puis calciné sous air à 420°C pendant 2h dans un réacteur tubulaire en lit fixe. Le catalyseur final F contient alors 14,8% poids de cobalt, et est basé sur un support co-stabilisé par du silicium et du phosphore.

### Catalyseur G (selon l'invention) : Catalyseur 15% Co sur silice alumine phosphorée à 10,7% SiO₂ et à 1 % P

Sur un support commercial Siralox® 10 (Sasol Germany) contenant 10,7% poids de silice est imprégnée une solution d'acide phosphorique H₃PO₄. Le solide obtenu est séché en étuve à 120°C pendant 2 heures, puis calciné sous flux d'air dans un réacteur tubulaire en lit fixe à 420°C pendant 2 heures. Ainsi, ce support est à la fois stabilisé par du silicium (10,6 % poids de SiO₂) et par du phosphore (1 % poids de P). Sur ce support stabilisé, on imprègne une solution de nitrate de cobalt, et de la même manière que celle décrite précédemment, le solide est séché en étuve puis calciné sous air. Le solide intermédiaire calciné contient 8,8% poids de cobalt. De même que sur les exemples précédents, ce solide intermédiaire est à nouveau imprégné par une solution aqueuse de cobalt, séché à 120°C pendant 12 heures, puis calciné sous air dans un réacteur tubulaire en lit fixe à 420°C pendant 2h. Le catalyseur final G contient alors 14,9% poids de cobalt, et est basé sur un support co-stabilisé par du silicium et du phosphore.

### Exemple 2 : Comparaison des résistances hydrothermales des catalyseurs A à G

La caractérisation de la résistance hydrothermale est réalisée en mettant en contact 2 grammes de chacun des catalyseurs étudiés avec un mélange eau, heptane, pentane (respectivement 17% / 48% / 35 % poids) à 220°C pendant 600h dans un autoclave en mode statique sous pression autogène.
Après séchage, le produit est finalement analysé par diffraction des rayons X, un taux de boehmite formée est déterminé. L'analyse par diffractométrie de rayons X est effectuée pour tous les exemples en utilisant la méthode classique des poudres au moyen d'un diffractomètre (CuKα1+2= 0.15418 nm) équipé d'un monochromateur arrière courbe graphite et d'un détecteur à scintillation. Plus le taux de boehmite est élevé, moins le catalyseur est considéré comme résistant sur le plan hydrothermal.

Les résistances hydrothermales des solides A à G ont été caractérisées selon le protocole précédemment décrit et sont données dans le tableau 1. Le catalyseur A présente un taux de boehmite important qui est pris comme base 100 pour la comparaison avec les autres catalyseurs. La limite de quantification de la boehmite par cette technique ne permet pas une analyse d'un taux de boehmite inférieur à 2% de la valeur du taux de boehmite du catalyseur A. Un catalyseur extrêmement résistant pour lequel il est difficile de quantifier une très faible proportion de boehmite formée sera donc considéré comme ayant un taux de boehmite après test hydrothermal inférieur à 2% de la valeur du taux de boehmite du catalyseur A.

Les catalyseurs selon l'invention présentent tous de très bonnes performances par rapport aux catalyseurs comparatifs.

### Exemple 3: Performances catalytiques en procédé Fischer-Tropsch des catalyseurs A à G

Les catalyseurs A à G, avant d'être successivement testés en conversion du gaz de synthèse, sont réduits *ex situ* sous un flux d'hydrogène pur à 400°C pendant 16 heures en réacteur tubulaire. Une fois le catalyseur réduit, il est déchargé sous atmosphère d'argon et enrobé dans de la Sasolwax^{®} pour être stocké à l'abri de l'air avant test. La réaction de synthèse Fischer-Tropsch est opérée dans un réacteur de type slurry et fonctionnant en continu et opérant avec une concentration de 10% (vol) de catalyseur en phase slurry.
Chacun des catalyseurs se trouve sous forme de poudre de diamètre compris entre environ 30 et 170 microns.
Les conditions de test sont les suivantes :
Température = 220°C
Pression totale = 2MPa
Rapport molaire H₂/CO = 2
La conversion du CO est maintenue entre 45 et 50% pendant toute la durée du test.

Les conditions de test sont ajustées de façon à être à iso conversion de CO quelle que soit l'activité du catalyseur.
Les résultats ont été calculés pour les catalyseurs A à G par rapport au catalyseur A servant de référence et figurent dans le tableau 1 ci-dessous. Les sélectivités alpha paraffines sont aussi données ainsi que la sélectivité en méthane.
La mesure de la sélectivité en alpha paraffine se fait via une analyse par chromatographie en phase gazeuse des effluents de la réaction, dosage des paraffines et calcul de la pente de la courbe log mol (%) = f(nombre de carbone) qui correspond au coefficient alpha.

Les résultats du tableau 1 montrent les performances catalytiques des catalyseurs A à G ; il apparaît que les catalyseurs selon l'invention présentent des gains significatifs en activité et sélectivité (notamment alpha) par rapport aux catalyseurs comparatifs.

**Tableau 1**

| | Formulation cible | %Boehmite relatif (par analyse DRX) après test hydrothermal | Activité relative après 300 h de test sous charge syngas | Sélectivité de formation du méthane (%) | Sélectivité α des paraffines longues |
|---|---|---|---|---|---|
| A | 15% Co sur Al | 100 (base) | 100 (base) | 10 | 0,894 |
| B | 15%Co sur AIP (1%P) | 71 | 104 | 10,5 | 0,892 |
| C | 15% Co sur AlSi (5%SiO₂) | 46 | 106 | 10 | 0,896 |
| D | 15%Co sur AlSiP (5%SiO₂, 1 %P) | 24 | 122 | 9 | 0,905 |
| E | 15%Co sur AlSiP (5%SiO₂, 2,5%P) | <2 | 124 | 9 | 0,907 |
| F | 15%Co sur AlSiP (5%SiO₂, 5%P) | <2 | 116 | 10 | 0,901 |
| G | 15%Co sur AlSiP (10,7%SiO₂, 1%P) | <2 | 120 | 10,5 | 0,900 |

## Revendications

1. Procédé Fischer-Tropsch de synthèse d'hydrocarbures comprenant la mise en contact d'une charge comprenant du gaz de synthèse avec au moins un catalyseur sous une pression totale comprise entre 0,1 et 15 MPa, sous une température comprise entre 150 et 350°C, à une vitesse volumique horaire comprise entre 100 et 20000 volumes de gaz de synthèse par volume de catalyseur et par heure et avec un rapport molaire H₂/CO du gaz de synthèse entre 0,5 et 4, ledit catalyseur contenant une phase active comprenant au moins un métal du groupe VIIIB choisi parmi le cobalt, le nickel, le ruthénium et le fer, et un support d'oxydes comprenant de l'alumine, de la silice et du phosphore, l'alumine et la silice étant présents sous forme de mélange d'oxydes SiO₂-Al2O3 dénommée silice-alumine ou alumine silicée, étant entendu que l'alumine silicée est une alumine comprenant entre 0,5 et 10% en poids de silice par rapport au poids du support, et que la silice-alumine est une alumine comprenant un pourcentage de silice strictement supérieur à 10% en poids allant jusqu'à 30% en poids par rapport au poids du support, ledit support ne contenant pas de phase spinelle, et dans lequel la teneur en phosphore dudit support est entre 0,5% poids et 3 % poids dudit élément par rapport au poids total du support.

2. Procédé selon la revendication 1, dans lequel ledit support est une silice-alumine phosphorée ou une alumine silicée phosphorée.

3. Procédé selon les revendications 1 ou 2, dans lequel la teneur en silice dudit support est entre 1,5% poids à 20% poids par rapport au poids total du support.

4. Procédé selon les revendications 1 à 3, dans lequel le métal du groupe VIIIB est le cobalt.

5. Procédé selon les revendications 1 à 4, dans lequel la teneur en métal du groupe VIIIB est comprise entre 0,5 et 60 % poids par rapport au poids du catalyseur.

6. Procédé selon les revendications 1 à 5, dans lequel l'alumine à partir de laquelle le support est préparé a une surface spécifique comprise entre 50 m²/g et 500 m²/g, un volume poreux mesurée par porosimétrie au mercure compris entre 0,4 ml/g et 1,2 ml/g et une distribution poreuse monomodale.

7. Procédé selon les revendications 1 à 6, dans lequel le support comprend en outre un oxyde simple choisi parmi l'oxyde de titane, la cérine et la zircone, seul ou en mélange.

8. Procédé selon les revendications 1 à 7, dans lequel le catalyseur comprend en outre au moins un dopant choisi parmi un métal noble des groupes VIIB ou VIIIB, un élément alcalin ou un élément alcalino-terreux ou un élément du groupe IIIA.

9. Procédé selon les revendications 1 à 8, dans lequel, préalablement à son utilisation, le catalyseur subit un traitement réducteur de manière à obtenir un catalyseur dans lequel le métal du groupe VIIIB de la phase active est au moins partiellement sous forme métallique.

10. Procédé selon les revendications 1 à 9, lequel est mis en oeuvre dans un réacteur de type colonne à bulles.

11. Procédé selon les revendications 1 à 10, dans lequel ledit catalyseur se trouve sous forme de particules ayant une taille comprise entre 10 et 500 micromètres.

## Patentansprüche

1. Fischer-Tropsch-Verfahren zur Synthese von Kohlenwasserstoffen, umfassend das Inkontaktbringen einer Charge, umfassend Synthesegas, mit mindestens einem Katalysator unter einem Gesamtdruck zwischen 0,1 und 15 MPa, bei einer Temperatur zwischen 150 und 350°C, bei einer Volumenstundengeschwindigkeit zwischen 100 und 20000 Synthesegasvolumina pro Katalysatorvolumen und pro Stunde und mit einem Molverhältnis H₂/CO des Synthesegases zwischen 0,5 und 4, wobei der Katalysator eine aktive Phase enthält, umfassend mindestens ein Metall der gruppe VIIIB, das ausgewählt ist unter Kobalt, Nickel, Ruthenium und Eisen, und einen oxidischen Träger, umfassend Aluminiumoxid, Siliziumoxid und Phosphor, wobei das Aluminiumoxid und Siliziumoxid in Form eines Gemisches von Oxiden SiO₂-Al₂O₃ vorhanden sind, das Silizium-Aluminiumoxid oder siliziumhaltiges Aluminiumoxid genannt wird, wobei es sich versteht, dass das siliziumhaltige Aluminiumoxid ein Aluminiumoxid ist, umfassend zwischen 0,5 und 10 Gew.-% Siliziumoxid bezogen auf das Gewicht des Trägers, und dass das Silizium-Aluminiumoxid ein Aluminiumoxid ist, umfassend einen Prozentsatz an Siliziumoxid unbedingt über 10 Gew.-% bis zu 30 Gew.-% bezogen auf das Gewicht des Trägers, wobei der Träger keine Spinellphase enthält, und wobei der Phosphorgehalt des Trägers zwischen 0,5 Gew.-% und 3 Gew.-% des Elements bezogen auf das Gesamtgewicht des Trägers beträgt.

2. Verfahren nach Anspruch 1, bei dem der Träger ein phosphorhaltiges Silizium-Aluminiumoxid oder ein phosphorhaltiges siliziumhaltiges Aluminiumoxid ist.

3. Verfahren nach den Ansprüchen 1 oder 2, bei dem der Siliziumoxidgehalt des Trägers zwischen 1,5 Gew.-% und 20 Gew.-% bezogen auf das Gesamtgewicht des Trägers beträgt.

4. Verfahren nach den Ansprüchen 1 bis 3, bei dem das Metall der Gruppe VIIIB Kobalt ist.

5. Verfahren nach den Ansprüchen 1 bis 4, bei dem der Metallgehalt der Gruppe VIIIB zwischen 0,5 und 60 Gew.-% bezogen auf das Gewicht des Katalysators ist.

6. Verfahren nach den Ansprüchen 1 bis 5, bei dem das Aluminiumoxid, aus dem der Träger hergestellt ist, eine spezifische Fläche zwischen 50 m²/g und 500 m²/g, ein Porenvolumen, gemessen durch Quecksilber-Porosimetrie, zwischen 0,4 ml/g und 1,2 ml/g und eine monomodale Porenverteilung hat.

7. Verfahren nach den Ansprüchen 1 bis 6, bei dem der Träger ferner ein einfaches Oxid umfasst, das ausgewählt ist unter Titanoxid, Ceroxid und Zirkon alleine oder im Gemisch.

8. Verfahren nach den Ansprüchen 1 bis 7, bei dem der Katalysator ferner mindestens ein Dotiermittel umfasst, das ausgewählt ist unter einem Edelmetall der Gruppen VIIB oder VIIIB, einem alkalischen oder erdalkalischen Element oder einem Element der Gruppe IIIA.

9. Verfahren nach den Ansprüchen 1 bis 8, bei dem der Katalysator vor seiner Verwendung einer Reduktionsbehandlung unterzogen wird, um einen Katalysator zu erhalten, bei dem das Metall der Gruppe VIIIB der aktiven Phase zumindest teilweise in metallischer Form vorhanden ist.

10. Verfahren nach den Ansprüchen 1 bis 9, das in einem Reaktor des Typs Blasensäule eingesetzt wird.

11. Verfahren nach den Ansprüchen 1 bis 10, bei dem der Katalysator in Form von Partikeln mit einer Größe zwischen 10 und 500 Mikrometer vorhanden ist.

## Claims

1. A Fischer-Tropsch process for the synthesis of hydrocarbons comprising contacting a charge comprising synthesis gas with at least one catalyst under a total pressure of between 0.1 and 15 MPa at a temperature of between 150 and 350°C at an hourly space velocity of between 100 and 20000 volumes of synthesis gas per volume of catalyst and per hour and with an H_{2/}CO molar ratio in the synthesis gas of between 0.5 and 4, said catalyst containing an active phase comprising at least one metal of group VIIIB selected from cobalt, nickel, ruthenium and iron, and an oxides support comprising alumina, silica and phosphorus, the alumina and the silica being present in the form of a mixture of oxides SiO₂-Al₂O₃, referred as silica-alumina or silica-containing alumina, provided that a silica-containing alumina is an alumina comprising between 0.5 and 10% by weight of silica with respect to the weight of the support, and a silica-alumina is an alumina comprising a percentage of silica that is strictly greater than 10% by weight ranging up to 30% by weight with respect to the weight of the support, said oxides support not containing any spinel phase, wherein the phosphorus content of said support is between 0.3% by weight and 5% by weight of said element with respect to the total weight of the support.

2. A process according to claim 1 wherein said support is a phosphorus-containing silica-alumina or a phosphorus-containing silica-containing alumina.

3. A process according to claims 1 or 2 wherein the silica content of said support is between 1.5% by weight to 20% by weight with respect to the total weight of the support.

4. A process according to claims 1 to 3 wherein the metal of group VIIIB is cobalt.

5. A process according to claims 1 to 4 wherein the content of metal of group VIIIB is between 0.5 and 60% by weight with respect to the weight of the catalyst.

6. A process according to claims 1 to 5 wherein the alumina from which the support is prepared has a specific surface area of between 50 m²/g and 500 m²/g, a pore volume measured by mercury porosimetry of between 0.4 ml/g and 1.2 ml/g and a monomodal pore distribution.

7. A process according to claims 1 to 6 wherein the support further comprises a simple oxide selected from titanium oxide, ceria and zirconia, alone or as a mixture.

8. A process according to claims 1 to 7 wherein the catalyst further comprises at least one dopant selected from a noble metal of groups VIIB or VIIIB, an alkali metal element or an alkaline-earth element or an element of group IIIA.

9. A process according to claims 1 to 8 wherein, prior to its use, the catalyst is subjected to a reducing treatment so as to obtain a catalyst in which the metal of group VIIIB of the active phase is at least partially in metallic form.

10. A process according to claims 1 to 9 which is used in a reactor of slurry bubble column type.

11. A process according to claims 1 to 10 wherein said catalyst is in the form of particles of a size of between 10 and 500 micrometres.
